# EUROPÄISCHE PATENTSCHRIFT

(11) **EP 2 433 094 B1**
(45) Veröffentlichungstag und Bekanntmachung des Hinweises auf die Patenterteilung: **04.03.2015**
(21) Anmeldenummer: 10713897.6
(22) Anmeldetag: 06.04.2010
(51) Int. Cl.: G01C 19/56, G01C 19/5726

(54) **SELBSTTEST FÜR DREHRATENSENSOREN**
SELF-TEST FOR ROTATION RATE SENSORS
TEST AUTOMATIQUE POUR CAPTEURS DE VITESSE DE ROTATION

(30) Priorität: 19.05.2009 DE 102009003217
(43) Veröffentlichungstag der Anmeldung: 28.03.2012
(73) Patentinhaber: Robert Bosch GmbH, 70442 Stuttgart (DE)
(72) Erfinder: BAUER, Wolfram, 72074 Tuebingen (DE); CLASSEN, Johannes, 72764 Reutlingen (DE); WILLIG, Rainer, 71732 Tamm (DE); MEIER, Matthias, 72764 Reutlingen (DE); KUHLMANN, Burkhard, 72762 Reutlingen (DE); REIMANN, Mathias, 71254 Ditzingen (DE); ESCH, Ermin, 72124 Pliezhausen (DE); SCHWARZ, Hans-Dieter, 72336 Balingen (DE); VEITH, Michael, 72766 Reutlingen (DE); LANG, Christoph, Cupertino, CA 22841 (US); GOMEZ, Udo-Martin, 71229 Leonberg (DE)
(86) Internationale Anmeldenummer: PCT/EP2010/054479
(87) Internationale Veröffentlichungsnummer: WO 2010/133394

(56) Entgegenhaltungen:
- DE-A1- 4 447 005
- DE-A1-102005 004 775
- US-A1- 2005 091 006
- US-A1- 2009 114 016

## Beschreibung

Die Erfindung betrifft mehrere Drehratensensoren, wobei der jeweilige Drehratensensor eine bewegliche Massenstruktur, eine Antriebskomponente und eine Auswertekomponente umfasst, wobei die Antriebskomponente dazu geeignet ist, die bewegliche Massenstruktur in Bewegung zu versetzen und/oder in Bewegung zu halten und wobei die Auswertekomponente dazu geeignet ist, eine Reaktion der beweglichen Massenstruktur auf eine Drehrate zu erfassen. Außerdem betrifft die Erfindung mehrere Verfahren zur Funktionsprüfung eines Drehratensensors, wobei das jeweilige Verfahren folgende Schritte umfasst: Antreiben einer beweglichen Massenstruktur, Einspeisen eines Testsignals in einen Quadraturregelkreis an einem Einspeiseort des Quadraturregelkreises, Rückführen eines Auslenkens der beweglichen Massenstruktur, Erfassen eines Maßes des Rückführens der beweglichen Massenstruktur, Auslesen eines Antwortsignals aus dem Quadraturregelkreis.

### Stand der Technik

In einem konventionellen Sensor, wie dem in DE 10 2005 004 775 A1 beschriebenen, ist ein Ausleseort für ein Antwortsignal (auf das Testsignal) zwischen einem Stellglied zur Rückführung einer Auslenkung der beweglichen Massenstruktur und einem Einspeiseort für das Testsignal angeordnet. Es ist ein Nachteil des konventionellen Sensors, dass ein Abschnitt des Quadraturregelkreises zwischen dem Einspeiseort und Ausleseort von der Funktionsprüfung nicht erfasst wird.

Aus US 2005/0091006 A1 ist ein Drehratensensor mit einer Testfunktion bekannt, wobei ein Testsignal über eine Amplitudensteuerung einer Antriebssteuerung des Sensorelements zugeführt wird. Eine Bewegungsamplitude des Sensorelements wird erfasst und einer Fehlerüberwachungseinrichtung zugeführt. Als zweites Eingangssignal erhält die Fehlerüberwachungseinrichtung zusätzlich zur Bewegungsamplitude ein Amplitudeneingangssignal, dem zudem das Testsignal aufaddiert ist.

Aus DE 10 2005 004 775 A1 ist ein Sensor mit einem Selbsttest bekannt. Der Sensor ist als Drehratensensor ausgebildet und weist eine bewegliche Massenstruktur mit einer Antriebskomponente und einer Auswertekomponente auf, wobei ein Quadraturregelkreis zur Unterdrückung einer Störauslenkung vorgesehen ist. Weiterhin sind Mittel für einen Selbsttest des Signalpfades vorgesehen, mittels derer eine Störauslenkung induziert wird. Das Störsignal wird über den Quadraturregelkreis der Detektionsmasse zugeführt.

### Offenbarung der Erfindung

Die Aufgabe der Erfindung besteht darin, eine verbesserte Funktionsprüfung bereitzustellen. Die Aufgabe wird mit dem Drehratensensor gemäß Anspruch 1 und mit dem Verfahren gemäß Anspruch 5 gelöst. Dieser Vorteil wird dadurch erreicht, dass ein Ausleseort für ein Antwortsignal in Bezug auf eine Verarbeitungsrichtung des Testsignals zwischen einem Einspeiseort für ein Testsignal und einem Stellglied zur Rückführung einer Auslenkung der beweglichen Massenstruktur angeordnet ist.

Vorteilhafte Ausführungsformen der Erfindung sind in den abhängigen Ansprüchen angegeben.

In einer weiteren Ausführungsform sind zum Anlegen des Testsignals an der beweglichen Massenstruktur andere Aktoren, insbesondere andere Elektroden, vorgesehen als für eine Quadraturkompensation. Dadurch wird der Aufwand reduziert.

In einer weiteren Ausführung wird ein Testsignal verwendet, das ein Antwortsignal verursacht, das im Wesentlichen mittelwertfrei ist. Dadurch können Offset-Fehler vermieden werden.

Eine weitere Ausführungsform sieht vor, dass ein Zusammenhang zwischen einem Pegel des Testsignals und einem Pegel des Antwortsignals, den das Testsignal über einen Verarbeitungsweg des Testsignals bewirkt, linear ist. Dadurch können Offset-Fehler vermieden werden.

In einer weiteren Ausführungsform ist das Auslesen des Antwortsignals in Bezug auf eine Verarbeitungsrichtung des Testsignals zwischen dem Einspeiseort und einem Ort des Rückführens der beweglichen Massenstruktur vorgesehen. Dadurch können alle Abschnitte des Quadraturregelkreises überprüft werden.

In einer weiteren Ausführungsform liegt ein wesentlicher Teil eines Leistungsspektrums des Antwortsignals oberhalb einer Bandbreite eines Ausgangsfilters für eine Drehrateninformation. Dadurch kann ein Übersprechen zwischen dem Testsignal und dem Nutzsignal reduziert werden.

In einer weiteren Ausführungsform liegt ein wesentlicher Teil eines Leistungsspektrums des Antwortsignals oberhalb einer Bandbreite des Quadraturregelkreises. Auch dadurch wird ein Übersprechen zwischen Testsignal und Nutzsignal verbessert.

In einer weiteren Ausführungsform ist eine Frequenz des Testsignals kleiner als eine inverse Regelzeitkonstante des Quadraturregelkreises. Dadurch wird die Genauigkeit der Funktionsprüfung verbessert.

In einer weiteren Ausführungsform weist das Testsignal einen Sinusverlauf auf. Dadurch werden elektromagnetische Störungen reduziert.

In einer weiteren Ausführungsform wird das Testsignal entsprechend einer inversen Arbeitspunktabhängigkeit des Quadraturregelkreises dosiert. Dadurch wird eine Variabilität des Signal-Rausch-Verhältnisses verringert.

Die Erfindung wird nun mit Bezug auf die begleitenden Figuren anhand besonders bevorzugter Ausführungsformen erläutert.

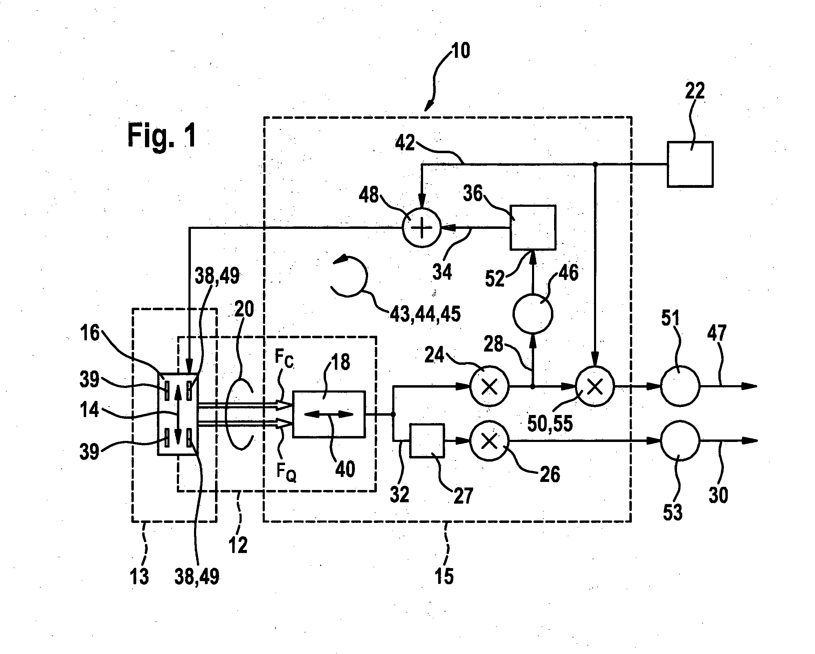

- Fig. 1 bis 3: zeigen schematische Blockschaltbilder einer ersten bis dritten Ausführungsform eines erfindungsgemäßen Drehratensensors.

In einem mikromechanischen Drehratensensor 10 (Vibrationsgyrometer) wird zur Bestimmung einer äußeren Drehrate Ω der Corioliseffekt genutzt. Dazu wird eine bewegliche Massenstruktur 12 des Sensors 10 in einer ersten Richtung x in eine Geschwindigkeit v versetzt. Dies erfolgt mittels einer Antriebsschwingung 14, die eine Frequenz ω_{A} aufweist. Die bewegliche Massenstruktur 12 kann eine Antriebsmasse 16 und eine Detektionsmasse 18 umfassen, wobei eine bevorzugte Schwingungsrichtung x der Antriebsmasse 16 orthogonal zu einer bevorzugten Schwingungsrichtung y der Detektionsmasse 18 orientiert ist. Durch mechanische Kopplung 20 mittels einer Federanordnung in Richtung der bevorzugten Schwingungsrichtung y der Detektionsmasse 18 wird auf die Detektionsmasse 18 eine auf die Antriebsmasse 16 wirkende Corioliskraft F_{c} übertragen, die aufgrund einer Drehrate Ω der Massenstruktur 12 entsteht. Da i. allg. keine exakte Orthogonalität beider Schwingungsrichtungen x, y vorliegt, entsteht infolge der Auslenkung 14 der Antriebsmasse 16 eine zweite (zu der Corioliskraft F_{C} unterschiedliche) Kraftkomponente F_{Q} (Quadraturanteil) in der bevorzugten Schwingungsrichtung y der Detektionsmasse 18. Der Coriolis- und der Quadraturanteil sind zueinander um 90° phasenverschoben, so dass die beiden Komponenten F_{C}, F_{Q} separiert ermittelt werden können, und zwar mittels einer Demodulation 24, 26 mit der Antriebsfrequenz ω_{A}. Der Demodulator 24 erzeugt das Quadratursignal 28. Die Demodulation 26 des mittels eines Phasenschiebers 27 um 90° versetzten Detektionssignals 32 liefert das Messsignal 30, welches proportional zur Drehrate Ω ist. Die Erfassung des Detektionssignals 32 kann mittels einer open- oder closed-loop-Konfiguration erfolgen. Das Ausgangssignal 34 des Integralreglers 36 wirkt der Ursache der Quadratur Fq entgegen, indem ein in Spannung gewandeltes Ausgangssignal 34 (Quadl-Signal) auf QuadraturKompensationselektroden 38 gegeben wird. Mittels einer entsprechend ausgebildeten Elektrodenform wird eine Querkraft erzeugt, die zur Auslenkung x proportional ist, und die Richtung der Antriebsschwingung 14 soweit dreht, bis deren Kraftwirkung Fq auf die Detektionsschwingung 40 verschwindet.

Zur Funktionsprüfung wird mittels eines Testsignallieferanten 22 ein periodisches Testsignal 42 bereitgestellt, das periodische Pulse oder einen Sinusverlauf aufweist, und in den Quadraturregelkreis 44 eingespeist (siehe Fig. 1). Typischerweise wird das Nutzsignal dadurch gar nicht oder nur in tolerierbarer Weise beeinflusst, so dass die Funktionsprüfung kontinuierlich, d.h. permanent erfolgen kann und eine Unterbrechung der Nutzsignalerfassung zwecks Funktionsprüfung nicht erforderlich ist. Ein erstes Verfahren besteht darin, das Testsignal 42 auf das Ausgangssignal 34 des Integralreglers 36 zu addieren. Mittels einer einzelnen oder einer Kombination der folgenden Maßnahmen kann ein Rückstellen des aufaddierten Testsignals 42 durch den Regler 36 verhindert werden und eine vollständige Ausprägung des Antwortsignals 47 unterstützt werden. Beispielsweise kann eine Frequenz ωT des Testsignals 42 deutlich oberhalb einer Bandbreite des Quadraturregelkreises 44 gewählt werden. Dazu kann am Eingang des Reglers 36 ein Bandpassfilter 46 angeordnet werden. Alternativ kann am Eingang des Reglers 36 ein Zeitpassfilter 46 angeordnet werden, das mittels periodischen Austastens (Anhaltens) des Reglers 36 selektiv im Zeitbereich wirkt, wobei Austastverhältnis und Phase des Austastschemas an Form und Laufzeit des Antwortsignals 47 angepasst werden sollten.

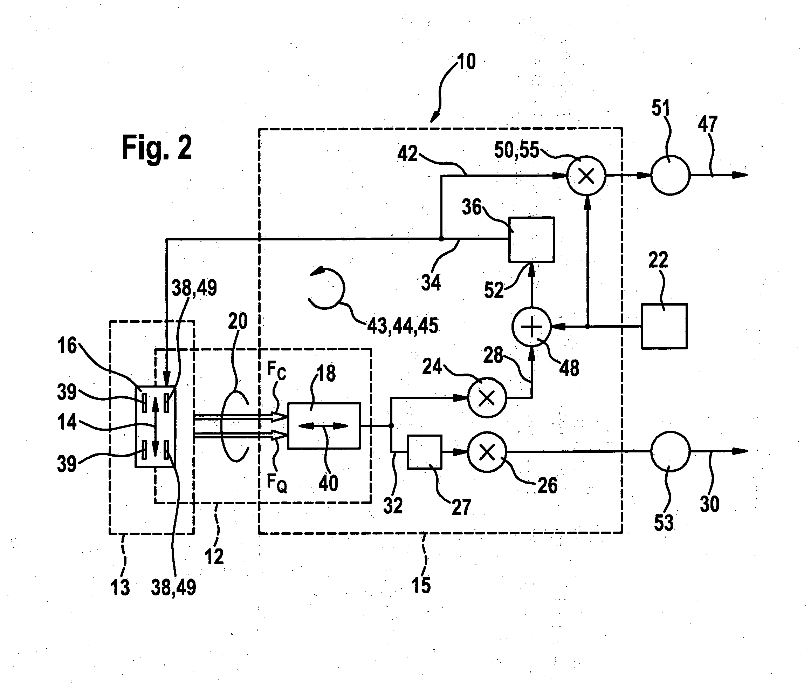

Das Auslesen des Antwortsignals 47 kann nach der Demodulation 24 des Detektionssignals 32 in den Quadraturkanal 28 erfolgen. Die Demodulation 55 mit der Frequenz ωT des Testsignals 42 plus Tiefpassfilterung 51 kann als Antwortsignal 47 ein gleichstromähnliches Signal liefern. Alternativ kann die Reihenfolge von Einspeisepunkt 48 und Auslesepunkt 50 vertauscht werden (siehe Fig. 2). Der Einspeisepunkt 48 für das Testsignal 42 liegt dann beispielsweise am Eingang 52 des Reglers 36. Das Antwortsignal 47 kann am Ausgang 54 des Reglers 36 abgegriffen werden und mittels Demodulation 50 mit dem Testsignal 42 in ein gleichstromähnliches Signal überführt werden. Hierfür sollte eine Bandbreite des Quadraturregelkreise 44 größer sein als die Frequenz ω_{T} des Testsignals 42.

Um eine ausreichende Genauigkeit der Funktionsprüfung zu erreichen, sollte die Bewertung des Antwortsignals 47 zumindest alle wesentlichen Einflüsse auf das Testsignal 42 berücksichtigen. Vorzugsweise ist das Antwortsignal 47 nicht von einem Einschwingverhalten der Antriebsstruktur 12 abhängig. Dies kann dadurch erreicht werden, dass die Testsignalfrequenz ω_{T} hinreichend niedrig gewählt wird. Auch sollte das Antwortsignal 47 nicht von einer "externen" Zeitkonstanten abhängen, wie sie beispielsweise ein Taktgeber aufweist, der mit der oder mit dem die Antriebsschwingung 14 synchronisiert wird. Damit die Drehratenmessung durch die Funktionsprüfung nicht unzulässig beeinträchtigt wird, sollten eventuelle Fehlerquellen bei der Demodulation und Trennung in den Drehratenanteil und Quadraturanteil berücksichtigt werden. Deshalb kann es vorteilhaft sein, die Testsignalfrequenz ω_{T} deutlich oberhalb einer Bandbreite eines Ausgangsfilters 53 für die Drehrateninformation 30 zu wählen, um das Testsignal 42 und Antwortsignal 47 frequenzmäßig vom Nutzsignal 30 zu trennen. Um Offset-Fehler zu vermeiden, sollte das auf das eingespeiste Testsignal 42 zu erwartende Antwortsignal 47 mittelwertfrei sein.

Das Quadratursignal ist proportional zur Kraftwirkung der Quadraturelektroden 38 und damit zum Quadrat der Potentiale der Quadraturelektroden 38. Da das Testsignal 42 auf diese Potentiale zum bestehenden Reglerpotential 34 hinzuaddiert wird, ist der Zusammenhang zwischen einem Pegel des Testsignals 42 und einem Pegel (Amplitude oder Gleichstrompegel) des Antwortsignals 47 nicht linear, sondern von einem Arbeitspunkt des Reglers 36 abhängig. Um die Arbeitspunktabhängigkeit zu berücksichtigen, werden folgende Konzepte vorgeschlagen:
Konzept "Berechnung zur Laufzeit": Der Zusammenhang zwischen Potentialen an den Quadraturelektroden 38 und dadurch erzeugter Quadratur Fq ist analytisch beschreibbar und hängt im Wesentlichen von einer Kompensationsfähigkeit des Sensors 10 ab. Mittels laufender Rechnung in einem Rechenwerk (beispielsweise Mikrocontroller) wird aus dem Testsignal 42 und dem Antwortsignal 47 ein Maß für die Kompensationsfähigkeit extrahiert. Die Bewertung der Kompensationsfähigkeit kann im Vergleich zu einem Neuteilewert erfolgen. Ein alternatives Konzept sieht vor, dass das Rechenwerk dafür verwendet wird, ausgehend von einem aktuellen Arbeitspunkt (Quadl-Wert), einen Pegel des Testsignals 42 so zu bestimmen, dass das Antwortsignal 47 stets einem vorgegebenen (arbeitspunktunabhängigen) Wert entspricht. Diese Art der Kompensation führt vorteilhafterweise zu einem Antwortsignal 47 mit einem arbeitspunktunabhängigen, also konstanten Signal-Rausch-Verhältnis.

Konzept "Nachschlagetabelle (Lookup-Tabelle)": Um die Arbeitspunktabhängigkeit der Funktionsprüfung zu berücksichtigen, kann statt eines Rechenwerks ein nichtflüchtiger Speicher eingesetzt werden, der eine Tabelle enthält, die dazu geeignet und/oder vorgesehen ist, für die zu messenden Arbeitspunkte (Quadl-Werte) den jeweils zu erwartenden Pegel des Antwörtsignals 47 zu liefern. Der zu erwartende Pegel des Antwortsignals 47 kann mit dem tatsächlich gemessenen Pegel des Antwortsignals 47 verglichen werden. Eine alternative Möglichkeit besteht auch hier darin, das einzuspeisende Signal 42 entsprechend einer Umkehrfunktion der Arbeitspunktabhängigkeit (d.h. entsprechend einer inversen Arbeitspunktabhängigkeit) zu dosieren. Dazu enthält die Tabelle für mehrere mögliche Arbeitspunkte ein Maß für einen jeweils zu verwendenden Pegel des Test-signals, der benötigt wird, um einen vorgegebenen Sollpegel des Antwortsignals 47 zu bewirken.

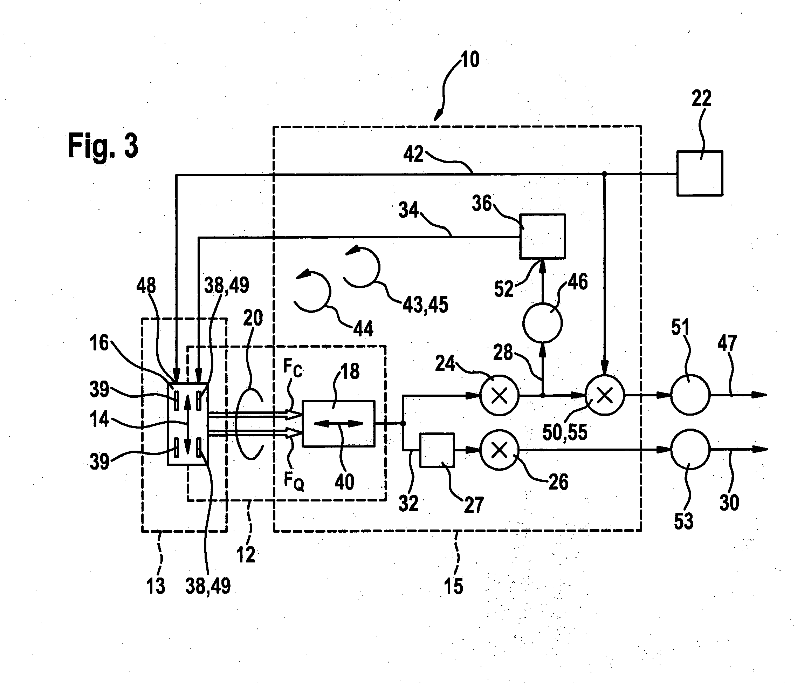

Durch entsprechendes Design des Sensors 10 kann ein funktionaler Zusammenhang zwischen Testsignal 42 auf die Quadraturelektroden 38 und erzeugter Quadratur vereinfacht werden und damit auch der Aufwand für eine Berücksichtigung der Arbeitspunktabhängigkeit. Mittels Verwendung eigener Elektroden 39 für die Testsignaleinspeisung 48, die unterschiedlich zu denen 38 für die Quadraturregelung 36 sind, kann erreicht werden, dass ein Pegel des Antwortsignals 47 proportional zu einem Quadrat des eingespeisten Testsignals 42 ist (siehe Fig. 3). Dann erfordert das Verfahren zur Berechnung der Laufzeit keine höhere Rechenart (Rechenfunktion) als Multiplikation. Die Elektroden 39 zur Einspeisung des Testsignals 42 können so gestaltet sein, dass ein Zusammenhang zwischen einem Pegel des Testsignals 42 und einem Pegel des Antwortsignals 47 linear ist.

## Patentansprüche

1. Drehratensensor (10), wobei der Drehratensensor (10) eine bewegliche Massenstruktur (12), eine Antriebskomponente (13) und eine Auswertekomponente (15) umfasst,
wobei die Antriebskomponente (13) dazu geeignet ist, die bewegliche Massenstruktur (12) in eine Antriebsschwingung (14) zu versetzen und/oder in einer Antriebsschwingung (14) zu halten und
wobei die Auswertekomponente (15) dazu geeignet ist, eine Detektionsschwingung (40) der beweglichen Massenstruktur (12) infolge einer Drehrate (Q) zu erfassen,
wobei die bewegliche Massenstruktur (12) eine Antriebsmasse (16) und eine Detektionsmasse (18) umfasst,
wobei die Antriebsmasse (16) durch eine mechanische Kopplung mittels einer Federanordnung mit der Detektionsmasse (18) in Verbindung steht,
wobei die Antriebsmasse (16) in einer Antriebsschwingung (14) bewegbar ist, **dadurch gekennzeichnet, dass**
Quadraturkompensationselektroden (38) vorgesehen sind, mit denen die Richtung der Antriebsschwingung (14) der Antriebsmasse (16) gedreht werden kann, bis eine Kraftwirkung auf eine Detektionsschwingung (40) der Detektionsmasse (18) verschwindet,
dass die Quadraturkompensationselektroden (38) mit einem Testsignallieferanten (22) eines Testsignals verbunden sind,
wobei der Testsignallieferant (22) dazu eingerichtet ist, das Testsignal an die Quadraturkompensationselektroden (38) abzugeben,
dass ein Ausleseort (50) für ein Antwortsignal (47) in Bezug auf eine Verarbeitungsrichtung (45) des Testsignals (42) zwischen einem Einspeiseort (48) für das Testsignal (42) und den Quadraturkompensationselektroden (38) angeordnet ist.

2. Drehratensensor (10) gemäß Anspruch 1, **dadurch gekennzeichnet, dass** zum Anlegen des Testsignals (42) an der beweglichen Massenstruktur (12) andere Aktoren (39), insbesondere andere Elektroden (39), vorgesehen sind als für eine Quadraturkompensation.

3. Drehratensensor (10) gemäß Anspruch 1 oder 2, **dadurch gekennzeichnet, dass** das Testsignal (42) ein Antwortsignal (47) verursacht, das im Wesentlichen mittelwertfrei ist.

4. Drehratensensor (10) gemäß einem der Ansprüche 1 bis 3, **dadurch gekennzeichnet, dass** ein Zusammenhang zwischen einem Pegel des Testsignals (42) und einem Pegel des Antwortsignals (47), den das Testsignal (42) über einen Verarbeitungsweg (43) des Testsignals (42) bewirkt, linear ist.

5. Verfahren zur Funktionsprüfung eines Drehratensensors (10), wobei das Verfahren folgende Schritte umfasst:
- Antreiben einer beweglichen Massenstruktur (12), die eine Antriebsmasse (16) und eine Detektionsmasse (18) umfasst, wobei die Antriebsmasse (16) in Wirkverbindung mit einer Detektionsmasse (18) steht,
- Einspeisen eines Testsignals (42) in einen Quadraturregelkreis (44) an einem Einspeiseort (48) des Quadraturregelkreises (44);
- Rückführen einer Detektionsschwingung (40) der beweglichen Massenstruktur (12);
- Erfassen eines Maßes des Rückführens der beweglichen Massenstruktur (12);
- Auslesen eines vom Testsignal (42) abhängigen Antwortsignals (47) aus dem Quadraturregelkreis (44);
**dadurch gekennzeichnet,**
- **dass** der Quadraturregelkreis (44) mit Quadraturkompensationselektroden (38) der Antriebsmasse (16) verbunden ist,
- **dass** das Rückführen der Detektionsschwingung (40) der beweglichen Massenstruktur (12) mittels der Quadraturkompensationselektroden (38) erfolgt, die die Richtung der Antriebsschwingung (14) der Antriebsmasse (16) drehen, bis eine Kraftwirkung auf die Detektionsschwingung (40) verschwindet;
- **dass** das Auslesen des Antwortsignals (47) in Bezug auf eine Verarbeitungsrichtung (45) des Testsignals (42) zwischen dem Einspeiseort (48) und einem Ort (49) des Rückführens der beweglichen Massenstruktur (12) vorgesehen ist.

6. Verfahren gemäß Anspruch 5, **dadurch gekennzeichnet, dass** ein wesentlicher Teil eines Leistungsspektrums des Antwortsignals (47) oberhalb einer Bandbreite eines Ausgangsfilters (51) für eine Drehrateninformation (30) liegt.

7. Verfahren gemäß Anspruch 5, **dadurch gekennzeichnet, dass** ein wesentlicher Teil eines Leistungsspektrums des Antwortsignals (42) oberhalb einer Bandbreite des Quadraturregelkreises (44) liegt.

8. Verfahren gemäß einem der Ansprüche 5 bis 7, **dadurch gekennzeichnet, dass** eine Frequenz (ω_{T}) des Testsignals (42) kleiner ist als eine inverse Regelzeitkonstante des Quadraturregelkreises (44).

9. Verfahren gemäß einem der Ansprüche 5 bis 8, **dadurch gekennzeichnet, dass** das Testsignal (42) einen Sinusverlauf aufweist.

10. Verfahren gemäß einem der Ansprüche 5 bis 9, **dadurch gekennzeichnet, dass** das Testsignal (42) entsprechend einer inversen Arbeitspunktabhängigkeit des Quadraturregelkreises (44) dosiert wird.

## Claims

1. Rate-of-rotation sensor (10), the rate-of-rotation sensor (10) comprising a movable mass structure (12), a drive component (13) and an evaluation component (15),
the drive component (13) being suitable to impart a drive oscillation (14) to the movable mass structure (12) and/or to maintain the latter in a drive oscillation (14), and
the evaluation component (15) being suitable to measure a detection oscillation (40) of the movable mass structure (12) as a result of a rate of rotation (Q),
the movable mass structure (12) comprising a drive mass (16) and a detection mass (18),
the drive mass (16) being connected to the detection mass (18) via a mechanical coupling by means of a spring arrangement,
the drive mass (16) being movable in a drive oscillation (14),
**characterized in that**
quadrature compensation electrodes (38) are provided, with which the direction of the drive oscillation (14) of the drive mass (16) can be rotated until an action of force on a detection oscillation (40) of the detection mass (18) vanishes,
**in that** the quadrature compensation electrodes (38) are connected to a test signal supplier (22) of a test signal,
the test signal supplier (22) being set up to output the test signal to the quadrature compensation electrodes (38),
**in that**, in relation to a processing direction (45) of the test signal (42), a read location (50) for a response signal (47) is arranged between a feed location (48) for the test signal (42) and the quadrature compensation electrodes (38).

2. Rate-of-rotation sensor (10) according to Claim 1, **characterized in that**, in order to apply the test signal (42) to the movable mass structure (12), actuators (39) other than for quadrature compensation, in particular other electrodes (39), are provided.

3. Rate-of-rotation sensor (10) according to Claim 1 or 2, **characterized in that** the test signal (42) causes a substantially zero-mean response signal (47).

4. Rate-of-rotation sensor (10) according to one of Claims 1 to 3, **characterized in that** a relationship between a level of the test signal (42) and a level of the response signal (47) which the test signal (42) effects over a processing path (43) of the test signal (42) is linear.

5. Method for the functional testing of a rate-of-rotation sensor (10), the method comprising the following steps:
- driving a movable mass structure (12) which comprises a drive mass (16) and a detection mass (18), the drive mass (16) being operatively connected to a detection mass (18),
- feeding a test signal (42) into a quadrature control loop (44) at a feed location (48) of the quadrature control loop (44);
- feeding back a detection oscillation (40) of the movable mass structure (12);
- acquiring a measure of the feedback from the movable mass structure (12);
- reading a response signal (47) that depends on the test signal (42) from the quadrature control loop (44);
**characterized**
- **in that** the quadrature control loop (44) is connected to quadrature compensation electrodes (38) of the drive mass (16),
- **in that** the detection oscillation (40) of the movable mass structure (12) is fed back by means of the quadrature compensation electrodes (38) which rotate the direction of the drive oscillation (14) of the drive mass (16) until an action of force on the detection oscillation (40) vanishes;
- **in that**, in relation to a processing direction (45) of the test signal (42), the reading of the response signal (47) is provided between the feed location (48) and a location (49) of the feedback from the the movable mass structure (12).

6. Method according to Claim 5, **characterized in that** a substantial part of a power spectrum of the response signal (47) lies above a bandwidth of an output filter (51) for rate-of-rotation information (30).

7. Method according to Claim 5, **characterized in that** a substantial part of a power spectrum of the response signal (47) lies above a bandwidth of the quadrature control loop (44).

8. Method according to one of Claims 5 to 7, **characterized in that** a frequency (ω_{T}) of the test signal (42) is lower than an inverse control time constant of the quadrature control loop (44).

9. Method according to one of Claims 5 to 8, **characterized in that** the test signal (42) has a sinusoidal variation.

10. Method according to one of Claims 5 to 9, **characterized in that** the test signal (42) is metered in accordance with an inverse working point dependence of the quadrature control loop (44).

## Revendications

1. Capteur de vitesse de rotation (10), le capteur de vitesse de rotation (10) comprenant une structure de masse mobile (12), un composant d'entraînement (13) et un composant d'interprétation (15),
le composant d'entraînement (13) étant conçu pour amener la structure de masse mobile (12) dans une oscillation d'entraînement (14) et/ou pour la maintenir dans une oscillation d'entraînement (14) et
le composant d'interprétation (15) étant conçu pour détecter une oscillation de détection (40) de la structure de masse mobile (12) suite à une vitesse de rotation (Q),
la structure de masse mobile (12) comprenant une masse d'entraînement (16) et une masse de détection (18),
la masse d'entraînement (16) étant en liaison avec la masse de détection (18) par un couplage mécanique au moyen d'un arrangement de ressort,
la masse d'entraînement (16) pouvant être déplacée dans une oscillation d'entraînement (14),
**caractérisé en ce que**
des électrodes de compensation de quadrature (38) sont prévues, avec lesquelles il est possible de faire tourner la direction de l'oscillation d'entraînement (14) de la masse d'entraînement (16) jusqu'à ce qu'un effet dynamique sur une oscillation de détection (40) de la masse de détection (18) disparaisse,
**en ce que** les électrodes de compensation de quadrature (38) sont reliées avec un fournisseur de signal d'essai (22) d'un signal d'essai,
le fournisseur de signal d'essai (22) étant conçu pour délivrer le signal d'essai aux électrodes de compensation de quadrature (38),
**en ce qu'**un point de lecture (50) pour un signal de réponse (47), en référence à une direction de traitement (45) du signal d'essai (42), est disposé entre un point d'injection (48) du signal d'essai (42) et les électrodes de compensation de quadrature (38).

2. Capteur de vitesse de rotation (10) selon la revendication 1, **caractérisé en ce que** des actionneurs (39) différents, notamment des électrodes (39) différentes, que pour une compensation de quadrature sont prévus pour l'application du signal d'essai (42) à la structure de masse mobile (12).

3. Capteur de vitesse de rotation (10) selon la revendication 1 ou 2, **caractérisé en ce que** le signal d'essai (42) provoque un signal de réponse (47) qui est sensiblement exempt de valeur moyenne.

4. Capteur de vitesse de rotation (10) selon l'une des revendications 1 à 3, **caractérisé en ce qu'**une relation entre un niveau du signal d'essai (42) et un niveau du signal de réponse (47) que provoque le signal d'essai (42) par le biais d'une voie de traitement (43) du signal d'essai (42) est linéaire.

5. Procédé de contrôle du fonctionnement d'un capteur de vitesse de rotation (10), le procédé comprenant les étapes suivantes :;
- entraînement d'une structure de masse mobile (12), laquelle comprend une masse d'entraînement (16) et une masse de détection (18), la masse d'entraînement (16) étant en liaison active avec une masse de détection (18),
- injection d'un signal d'essai (42) dans un circuit de régulation en quadrature (44), à un point d'injection (48) du circuit de régulation en quadrature (44),
- recyclage d'une oscillation de détection (40) de la structure de masse mobile (12),
- détection d'une mesure du recyclage de la structure de masse mobile (12),
- lecture d'un signal de réponse (47) dépendant du signal d'essai (42) depuis le circuit de régulation en quadrature (44),
**caractérisé en ce**
- **que** le circuit de régulation en quadrature (44) est relié avec des électrodes de compensation de quadrature (38) de la masse d'entraînement (16),
- **que** le recyclage de l'oscillation de détection (40) de la structure de masse mobile (12) s'effectue au moyen des électrodes de compensation de quadrature (38) qui font tourner la direction de l'oscillation d'entraînement (14) de la masse d'entraînement (16) jusqu'à ce qu'un effet dynamique sur l'oscillation de détection (40) disparaisse,
- **que** la lecture du signal de réponse (47) est prévue en référence à une direction de traitement (45) du signal d'essai (42) entre le point d'injection (48) et un point (49) de recyclage de la structure de masse mobile (12).

6. Procédé selon la revendication 5, **caractérisé en ce qu'**une partie essentielle d'un spectre de puissance du signal de réponse (47) se trouve au-dessus d'une largeur de bande d'un filtre de sortie (51) pour une information de vitesse de rotation (30).

7. Procédé selon la revendication 5, **caractérisé en ce qu'**une partie essentielle d'un spectre de puissance du signal de réponse (47) se trouve au-dessus d'une largeur de bande du circuit de régulation en quadrature (44).

8. Procédé selon l'une des revendications 5 à 7, **caractérisé en ce qu'**une fréquence (ω_{T}) du signal d'essai (42) est inférieure à une constante de temps de régulation inverse du circuit de régulation en quadrature (44).

9. Procédé selon l'une des revendications 5 à 8, **caractérisé en ce que** le signal d'essai (42) présente un tracé sinusoïdal.

10. Procédé selon l'une des revendications 5 à 9, **caractérisé en ce que** le signal d'essai (42) est dosé conformément à une dépendance inverse au point de fonctionnement du circuit de régulation en quadrature (44).
